# EUROPÄISCHE PATENTANMELDUNG

(11) **EP 2 796 723 A1**
(43) Veröffentlichungstag der Anmeldung: **29.10.2014**
(21) Anmeldenummer: 13165578.9
(22) Anmeldetag: 26.04.2013
(51) Int. Cl.: F04D 13/06, H02K 3/52, H02K 5/22, H02K 11/00

(54) **Elektromotor mit weicher Leitung zwischen Statorspulen und Leiterplatte**

(71) Anmelder: Pierburg Pump Technology GmbH, 41460 Neuss (DE)
(72) Erfinder: Zill, Mathias, 01683 Nossen (DE); Lindner, Enrico, 09322 Penig (DE); Rathke, Ronald, 04720 Döbeln (DE)
(74) Vertreter: Patentanwälte ter Smitten Eberlein Rütten Partnerschaftsgesellschaft

(57) **Zusammenfassung**

Die Erfindung bezieht sich auf ein elektrisches Kfz-Aggregat (5) mit einem elektronisch kommutierten Antriebsmotor (10). Der elektronisch kommutierte Antriebsmotor (10) weist dabei einen permanent magnetischen Motorrotor (40), mehrere Statorspulen (15) und eine Steuerungselektronik (12) auf. Die Steuerungselektronik (12) ist im Wesentlichen auf einer Leiterplatte (30) angeordnet. Zwischen den Statorspulen (15) und der Leiterplatte (30) sind elektrische Verbindungsleitungen (34) angeordnet. Die elektrische Verbindungsleitungen (34) zwischen den Statorspulen (15) und der Leiterplatte (30) sind dabei widerstandslos verformbar ausgebildet.

## Beschreibung

Die Erfindung betrifft ein elektrisches Kfz-Aggregat mit einem elektronisch kommutierten Antriebsmotor, wobei der Antriebsmotor einen permanentmagentischen Motorrotor, mehrere Statorspulen und eine Steuerungselektronik aufweist. Die Steuerungselektronik ist im Wesentlichen auf einer Leiterplatte angeordnet. Die Verbindung zwischen den Statorspulen und der Leiterplatte wird durch mehrere elektrische Verbindungsleitungen realisiert.

Diese Verbindungsleitungen zwischen den Statorspulen und der Leiterplatte sind aufgrund von Vibrationen beim Betrieb des Antriebsmotors erheblichen mechanischen Belastungen ausgesetzt. Insbesondere bei älteren Verbindungen und/oder höheren Temperaturen können diese Belastungen dazu führen, dass die Verbindungsleitungen beschädigt oder die elektrische Verbindung komplett unterbrochen wird. Eine Unterbrechung der elektrischen Verbindung zwischen einer Statorspule und der Leiterplatte führt zum Ausfall des Antriebsmotors, wodurch unter Umständen weitere Folgeschäden resultieren können, beispielsweise wenn es sich bei dem elektrischen Kfz-Aggregat um eine Kühlmittelpumpe handelt.

Die Aufgabe der Erfindung ist es daher, die Zuverlässigkeit eines elektrischen Kfz-Aggregates zu verbessern.

Diese Aufgabe wird erfindungsgemäß durch ein elektrisches Kfz-Aggregat mit den Merkmalen des Anspruchs 1 gelöst.

Das erfindungsgemäße elektrische Kfz-Aggregat weist elektrische Verbindungsleitungen zwischen den Statorspulen und der Leiterplatte auf, die widerstandslos verformbar ausgebildet sind. Durch diese widerstandlos verformbaren Verbindungsleitungen wird eine Übertragung von mechanischen Schwingungen vermieden, die Belastung an den Verbindungsleitungsenden entsprechend minimiert und eine dauerhafte und sichere Kontaktierung der Verbindungsleitungen mit den Statorspulen einerseits und der Leiterplatte andererseits gewährleistet.

Bei Kfz-Aggregaten, beispielsweise Kühlmittelpumpen oder Ölpumpen, ist es zur Sicherstellung kurzer Leitungswege üblich, dass das Aggregat unmittelbar an den Motorblock des Verbrennungsmotors angebracht ist. Dadurch werden während des Motorbetriebes ständig starke mechanische Schwingungen auf das Aggregat übertragen. Trotz dieser ungünstigen Randbedingungen muss das Kfz-Aggregat, beispielsweise im Falle einer Kühlmittel-oder Schmiermittelpumpe, wegen seiner lebenswichtigen Aufgaben, eine extrem hohe Zuverlässigkeit aufweisen.

Zur Vermeidung der Übertragung von Kräften ist die Verbindungsleitung zwischen den Statorspulen und der Leiterplatte widerstandslos verformbar ausgebildet. Diese Verbindungsleitung ist also nicht starr, sondern mit sehr geringen Kräften verformbar, ohne dass es zu einer Unterbrechung der elektrischen Verbindung kommt.

Infolge der Flexibilität der elektrischen Verbindungsleitungen kann die Leiterplatte gedämpft und leicht beweglich aufgehängt werden, um sie auf diese Weise von hochfrequenten Schwingungen besser entkoppeln zu können.

Somit kann sich die Leiterplatte im Verhältnis zu den Statorspulen relativ frei bewegen. Auf eine gedämpfte Befestigung des Aggregats an dem Motorblock kann daher unter Umständen sogar ganz verzichtet werden. Auch wärmebedingte Abstandsänderungen zwischen der Statorspule und der Leiterplatte können auf diese Weise ausgeglichen, beziehungsweise toleriert werden.

In einer bevorzugten Ausführungsform ist die elektrische Verbindungsleitung zwischen den Statorspulen und der Leiterplatte schleifenartig ausgebildet. Durch die schleifenartige Ausbildung ist die Verbindungsleitungs-Länge erhöht und wird die Gesamtsteifheit der Leitung in Bezug auf die Schwingungsübertragung reduziert. Die Verbindungsleitungs-Enden werden dadurch weniger belastet. Unter einer Schleife ist vorliegend eine Ausführung mit einem Beugungswinkel a von mindestens 40° zu verstehen.

Ferner wird durch die schleifenartige Ausbildung die örtliche Verformung der Verbindungsleitungen reduziert und die Gefahr eines Bruches der Verbindungsleitungen verringert.

In einer bevorzugten Ausführungsform ist die elektrische Verbindungsleitung als Drahtlitze ausgebildet. Die Drahtlitze ist ein aus mehreren dünnen Einzeldrähten geflochtener und/oder verdrillter und daher leicht zu biegender elektrischer Leiter. Durch diese Vorrichtung wird die Gefahr eines Leitungsbruches im Vergleich zu einem Massivleitungsdraht deutlich reduziert. Die Drahtlitze kann als eigen-redundant angesehen werden. Selbst wenn einer der Drähte innerhalb der Litze bricht, ist weiterhin eine widerstandsarme elektrische Leistungsübertragung sichergestellt, was angesichts der wegen der geringen Kfz-Bordspannung von beispielsweise 12 V hohen Ströme von großer Bedeutung ist.

In einer weiteren bevorzugten Ausführungsform ist die elektrische Verbindungsleitung an dem einen Ende mit der Statorspule und an dem anderen Ende mit der Leiterplatte verschweißt, verlötet oder verklemmt.

Da die elektrische Anbindung der Verbindungsleitungen keiner mechanischen Belastung ausgesetzt ist, kann grundsätzlich jede elektrische Verbindungstechnik genutzt werden, unabhängig davon, wie empfindlich die jeweilige Technik in Bezug auf mechanische Belastungen ist. Die Verbindungstechnik kann frei gewählt werden, wobei die Wahl sich ausschließlich an elektrischen Kriterien sowie der Montagefreundlichkeit orientieren kann.

In einer weiteren Ausführungsform ist die Leiterplatte in einer Querebene liegend in der Nähe des Längsendes des Motorstators angeordnet. Unter Nähe ist vorliegend bevorzugt eine axiale Entfernung von weniger als 5 cm zu verstehen. Durch diese Ausführungsform wird eine sehr platzsparende Anordnung sichergestellt, so dass die Entfernung zwischen der Leiterplatte und jeder der Statorspulen annähernd gleich ist.

Die Entfernung der Leiterplatte zu allen Statorspulen ist gleich, d.h. die Verbindungsleitungen weisen in der gesamten Konstruktion die gleiche Länge auf. Dadurch findet in allen elektrischen Verbindungsleitungen der gleiche Spannungsabfall statt, so dass die elektrische Symmetrie über den Umfang erhalten bleibt.

Bevorzugt beträgt die Länge der elektrischen Verbindungsleitungen jeweils mindestens mehr als das 1,3fache des Axialabstandes L der elektrischen Verbindungsenden zueinander. Bevorzugt beträgt der Axialabstand der elektrischen Verbindungsenden zueinander mehr als das 1,5fache und insbesondere mehr als das 1,7fache des Axialabstandes L.

Durch diese Ausführung wird eine gute mechanische Entkopplung bei relativ geringer mechanischer Verformung der Verbindungsleitungen selbst realisiert. Durch die definierte Mindestlänge wird die Übertragung der mechanischen Schwingungen zwischen den Statorspulen und der Leiterplatte auf ein Minimum reduziert.

Ein Ausführungsbeispiel der Erfindung wird nachfolgend anhand der Zeichnungen näher erläutert:
Es zeigen:
   Figur 1: einen Längsschnitt eines elektrischen Kfz-Aggregats mit elektrischen Verbindungsleitungen zwischen der Leiterplatte und den Statorspulen, und
   Figur 2: eine detaillierte Darstellung einer elektrischen Verbindungsleitung zwischen der Leiterplatte und den Statorspulen des Kfz-Aggregates der Figur 1.

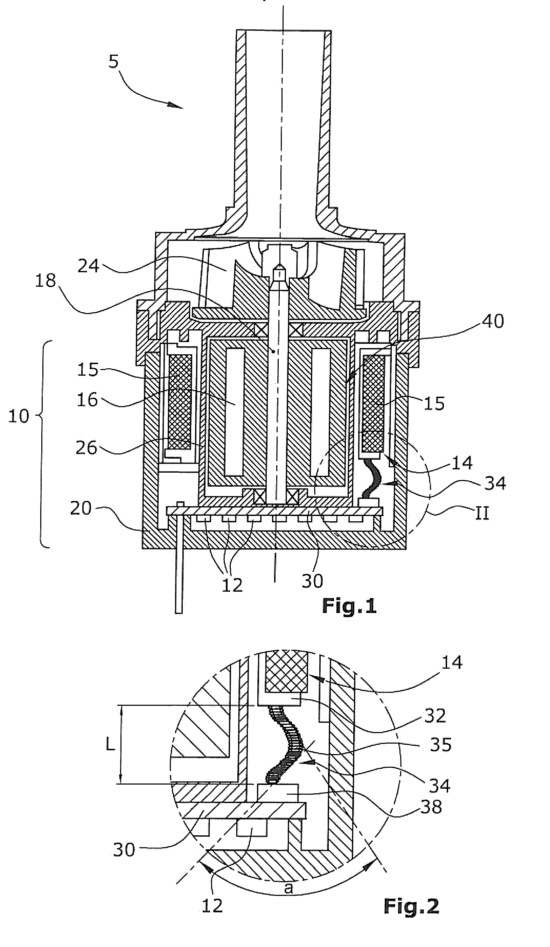

In der Figur 1 ist ein elektrisches Kfz-Aggregat 5 in Form einer Kühlmittelpumpe in einem Längsschnitt dargestellt. Die Kühlmittelpumpe dient der Versorgung eines Kfz-Verbrennungsmotors mit einem Kühlmittel, vorzugsweise Wasser. Das Kfz-Aggregat 5 weist im Wesentlichen ein Motorgehäuse 20 auf, in dem ein elektronisch kommutierter Antriebsmotor 10 angeordnet ist. Der Antriebsmotor 10 weist statorseitig einen Motorstator 14 mit den Statorspulen 15 und rotorseitig einen permanentmagnetischen Motorrotor 40 auf.

Der Antriebsmotor 10 weist ferner einen Spalttopf 26 auf, so dass der gesamte Motorrotor 40 einschließlich der Rotor-Permanentmagnete 16 im Nassbereich angeordnet ist. Der Motorstator 14 mit den Statorspulen 15 ist durch den Spalttopf 26 flüssigkeitsdicht getrennt von dem Nassbereich. Der Nassbereich ist durch den Spalttopf 26 vom trockenen Motorstator 14 und einer trockenen Leiterplatte 30 getrennt. Der Motorrotor 40 ist mit einem Pumpenlaufrad 24 über eine Rotorwelle 18 drehfest verbunden. Auf einer Leiterplatte 30 ist die Leistungs- und Steuerungselektronik 12 des Antriebsmotors 10 verwirklicht.

Die Leiterplatte 30 ist elektrisch mit den Statorspulen 15 verbunden. Auf der Leiterplatte 30 sind die einzelnen Bauteile der den Elektromotor 10 steuernden Leistungs- und Steuerungselektronik 12 angeordnet. Die elektrische Verbindung zwischen den Statorspulen 15 mit der Leiterplatte 30 ist über mehrere elektrische Verbindungsleitungen 34 realisiert.

Die Figur 2 zeigt eine detailliertere Darstellung einer elektrischen Verbindungsleitung 34, welche zwischen den Statorspulen 15 des Motorstators 14 und der Leiterplatte 30 angeordnet ist. Die flexible Verbindungsleitung 34 besteht aus einer schleifenartigen Drahtlitze 35, die mit ihren beiden Leitungsenden mit den Statorspulen 15 und der Leiterplatte 30 verbunden ist. Ein Leitungs-Ende der Verbindungsleitung 34, das im Wesentlichen senkrecht zur Leiterplatte 30 und zu dem Motorstator 14 des Elektromotors 10 orientiert ist, ist beispielsweise in eine als Klemmkontakt ausgebildete Buchse 32 eingesteckt, die wiederum mit der Statorspule 15 elektrisch verbunden ist. Ein zweiter Klemmkontakt 38, in das das andere Leitungs-Ende eingesteckt ist, ist über eine Lötverbindung mit der Leiterplatte 30 verlötet und auf diese Weise mit den Elektronikbauteilen 12 elektrisch verbunden.

Die schleifenartige Drahtlitze 35 ist mit einem Leitungsbogen mit einem Beugungswinkel a von ca. 80° ausgebildet. Die Länge der elektrischen Verbindungsleitung 34 beträgt ungefähr das 1,5fache des Axialabstandes L der elektrischen Verbindungsleitungs-Enden zueinander. Diese elektrischen Verbindungsleitungen 34 sind dabei unempfindlich gegenüber Vibrationen.

## Patentansprüche

1. Elektrisches Kfz-Aggregat (5) mit einem elektronisch kommutierten Antriebsmotor (10),
wobei der Antriebsmotor (10) einen permanentmagnetischen Motorrotor (40), mehrere Statorspulen (15) und eine Steuerungselektronik (12) aufweist, die im Wesentlichen auf einer Leiterplatte (30) angeordnet ist,
wobei zwischen den Statorspulen (15) und der Leiterplatte (30) elektrische Verbindungsleitungen (34) angeordnet sind,
**dadurch gekennzeichnet, dass**
die elektrischen Verbindungsleitungen (34) zwischen den Statorspulen (14) und der Leiterplatte (30) widerstandslos verformbar ausgebildet sind.

2. Elektrisches Kfz-Aggregat (10) nach einem der vorhergehenden Ansprüche, wobei die elektrischen Verbindungsleitungen (34) zwischen den Statorspulen (15) und der Leiterplatte (30) schleifenartig ausgebildet sind.

3. Elektrisches Kfz-Aggregat (10) nach einem der vorhergehenden Ansprüche, wobei die elektrischen Verbindungsleitungen (34) als Drahtlitze (35) ausgebildet sind.

4. Elektrisches Kfz-Aggregat (10) nach einem der vorhergehenden Ansprüche, wobei die elektrischen Verbindungsleitungen (34) mit ihrem einen Ende mit der Statorspule (15) und mit ihrem anderen Ende mit der Leiterplatte (30) verschweißt, verlötet oder verklemmt sind.

5. Elektrisches Kfz-Aggregat (10) nach einem der vorhergehenden Ansprüche, wobei die Leiterplatte (30) in einer Querebene liegend in der Nähe eines Längsendes des Motorstators (14) angeordnet ist.

6. Elektrisches Kfz-Aggregat (10) nach einem der vorhergehenden Ansprüche, wobei die Länge der elektrischen Verbindungsleitungen (34) mindestens mehr als das 1,3 fache, bevorzugt mehr als das 1,5 fache und besonders mehr als das 1,7 fache des Axialabstandes L der elektrischen Verbindungsleitungs-Enden (34) zueinander beträgt.
